Europäisches Patentamt

European Patent Office

Office européen des brevets

(11) Numéro de publication : **0 278 802 B1**

(12) **FASCICULE DE BREVET EUROPEEN**

(45) Date de publication du fascicule du brevet :
01.04.92 Bulletin 92/14

(51) Int. Cl.⁵ : **G05B 15/02, G05B 19/04**

(21) Numéro de dépôt : **88400065.4**

(22) Date de dépôt : **13.01.88**

(54) **Ensemble de commande et de protection connectant un réseau de communication local à un processus industriel.**

(30) Priorité : **26.01.87 FR 8700974**

(43) Date de publication de la demande :
**17.08.88 Bulletin 88/33**

(45) Mention de la délivrance du brevet :
**01.04.92 Bulletin 92/14**

(84) Etats contractants désignés :
**CH DE ES GB IT LI SE**

(56) Documents cités :
**EP-A- 0 155 213**
**DE-A- 3 122 109**
**REGELUNGSTECHNISCHE PRAXIS, vol. 21,**
**no. 5, 1979, pages 137-142; K.F. FRÜH:**
**"Tradition und Moderne: das dezentrale Pro-**
**zessautomatisierungs-system von Siemens"**
**IDEM**

(56) Documents cités :
**REGELUNGSTECHNISCHE PRAXIS, vol. 22,**
**no. 3, 1980, pages 73-104; W. SENDLER: "Eine**
**fehlertolerierende Reglerstation auf der Basis**
**eines busorientierten Multi-Mikrorechner-Sys-**
**tems"**

(73) Titulaire : **MERLIN GERIN**
**Rue Henri Tarze**
**F-38050 Grenoble Cédex (FR)**

(72) Inventeur : **Calvas, Roland**
**Merlin Gerin Sce. Brevets**
**F-38050 Grenoble Cédex (FR)**
Inventeur : **Françon, Claude**
**Merlin Gerin Sce. Brevets**
**F-38050 Grenoble Cédex (FR)**
Inventeur : **Matinal, Claude**
**Merlin Gerin Sce. Brevets**
**F-38050 Grenoble Cédex (FR)**

(74) Mandataire : **Kern, Paul et al**
**Merlin Gerin Sce. Brevets 20, rue Henri Tarze**
**F-38050 Grenoble Cédex (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

**Description**

L'invention concerne un ensemble de commande et de protection faisant partie d'un système de contrôle et de commande automatisé d'un processus industriel comportant au moins un automate programmable dont la sortie est reliée à un réseau de communication local.

De façon classique, un système de contrôle et de commande automatisé d'un processus industriel comporte au moins un automate programmable relié par un réseau de communication local à des modules d'entrées-sorties reliés par des liaisons fil à fil, généralement par l'intermédiaire d'éléments d'adaptation, notamment de circuits puissance, aux divers actionneurs et capteurs du processus. Voir par exemple l'article de K.F. FRÜH dans 'Regelungstechnik Praxis', vol. 21, no 5, 1979, Pages 137 à 142.

L'invention a pour but un ensemble de commande et de protection s'interconnectant en amont au réseau de communication local et couplé directement en aval aux actionneurs et capteurs du processus auxquels il fournit également la puissance électrique nécessaire.

L'ensemble selon l'invention comporte les éléments tels que décrits dans la revendication 1.

Dans un tel ensemble, l'utilisation de blocs de voies spécialisés, affectés à des voies d'un type prédéterminé et contenant un microprocesseur qui est préprogrammé de manière à assurer la commande et la protection des voies de ce type qui lui sont rattachées, permet d'obtenir une décentralisation et une standardisation importante des fonctions de commande et de protection. La programmation de l'automate programmable est simplifiée en conséquence. De plus, les fonctions de protection sont assurées de manière décentralisée, directement au niveau des blocs de voies, par le microprocesseur du bloc. Ainsi, par exemple, la protection thermique d'un moteur est assurée par le bloc de voie moteur correspondant et non pas, comme dans l'art antérieur, par l'automate programmable et au moyen d'un dispositif spécialisé. Cette décentralisation permet un traitement plus rapide et mieux adapté des pannes, indépendamment du déroulement de la séquence de commande par l'automate programmable. Les bloc de voies comportent également un dispositif d'auto-protection contre les surtensions et/ou les surintensités; ils sont réalisés par des dispositifs spécifiques à chaque bloc de voies; ainsi, à titre d'exemple, pour le bloc de voie moteur le dispositif est électro-mécanique. Il est à noter que l'ensemble ne fait pas la supervision du processus lui-même, mais renvoie les informations nécessaires à un niveau hiérarchique supérieur par l'intermédiaire du réseau local.

L'utilisation d'un réseau série interne pour relier les divers blocs de voies à un bloc de liaison, lui-même connecté au réseau de communication local et à une console destinée au dialogue, au niveau de l'ensemble, avec un opérateur, permet de limiter le nombre de fils de connexion à l'intérieur de l'ensemble et de réaliser la maintenance rapidement par échange des blocs de voies.

L'ensemble est de préférence réalisé sous forme d'un coffret modulaire, permettant ainsi de réaliser à partir d'un certain nombre, limité, de modules standards un ensemble adapté à l'application envisagée.

Un ensemble selon l'invention, qui constitue un interface unique entre le réseau local et les capteurs et actionneurs, est très facile à utiliser pour l'utilisateur qui n'a qu'à le connecter d'une part par des liaisons fil à fil aux capteurs et actionneurs et d'autre part, par trois bornes de connexion, au réseau d'alimentation en énergie électrique, à la console et au réseau de communication local.

La console permet de modifier localement les informations de configuration et de paramétrage, qui sont stockées dans l'ensemble selon l'invention, ces informations pouvant bien entendu également être modifiées à travers le réseau de communication local.

D'autres avantages et caractéristiques de l'invention ressortiront plus clairement de l'exposé qui va suivre d'un mode de mise en oeuvre de l'invention, donné à titre d'exemple non limitatif et représenté aux dessins annexés dans lesquels :

– la figure 1 représente un schéma synoptique simplifié d'un système de contrôle et de commande d'un processus industriel utilisant des ensembles de commande et de protection selon l'invention;

– la figure 2 représente un schéma synoptique d'un ensemble de commande et de protection selon l'invention;

– les figures 3 à 6 représentent, sous forme de schémas synoptiques, respectivement un bloc de liaison, un bloc de commande et de protection de voie moteur, un bloc de commande et de protection de voies vérin et un bloc d'entrée-sortie, appartenant à un ensemble selon l'invention.

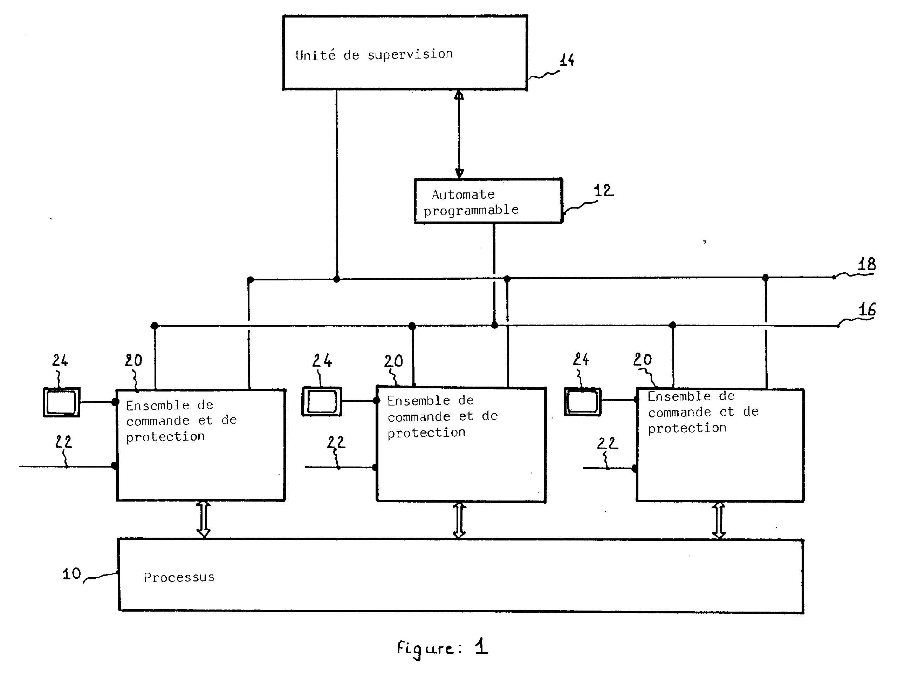

La figure 1 illustre de façon très schématique un système de contrôle et de commande automatisé d'un processus industriel 10. Un tel processus comporte divers actionneurs (non représentés), tels que des moteurs électriques, des vérins commandés par des distributeurs électro-pneumatiques ou électro-hydrauliques, etc, et divers capteurs, interrupteurs, etc, (non représentés) destinés à détecter l'état et les conditions du processus.

Le processus 10 est placé sous le contrôle d'un automate programmable 12, lui-même relié à une unité de supervision 14.

Dans le mode de réalisation préférentiel représenté sur la figure, la sortie de l'automate programmable 12 est reliée à un réseau local de communication 16, constituant un réseau de terrain, tandis que la sortie de l'unité de supervision 14 est reliée à un réseau local de communication 18, constituant un réseau de supervision, distinct du réseau de terrain. Ces réseaux, comme toutes les liaisons électroniques internes mentionnées par la suite, constituent des liaisons bidirectionnelles.

Le système comporte plusieurs ensembles 20 de commande et de protection selon l'invention, chaque ensemble 20 étant relié en amont aux deux réseaux locaux de communication 16 et 18, et en aval directement aux actionneurs et aux capteurs du processus 10.

Chaque ensemble 20 est de plus connecté à un réseau 22 d'alimentation en énergie électrique et à une console 24 qui lui est associée, cette console étant par exemple constituée par un terminal standard comportant un clavier et un dispositif d'affichage.

L'automate programmable 12 contrôle donc, par l'intermédiaire du réseau local 16 et des ensembles 20, le fonctionnement séquentiel du processus 10.

Bien que dans le mode de réalisation préférentiel représenté sur la figure, les ensembles 20 soient reliés à deux réseaux distincts, 16 et 18, il est possible, sans sortir du cadre de l'invention, d'utiliser un réseau local de communication unique assurant la liaison entre l'automate programmable 12 et les ensembles de commande du processus, les échanges d'informations entre le processus et l'élément de supervision 14 étant alors réalisés par l'intermédiaire de l'automate programmable 12.

Ces deux réseaux seront néanmoins, de préférence, distincts comme représenté sur la figure 1, les fonctions de protection n'étant pas effectuées au niveau de l'automate programmable, mais au maximum décentralisées dans les ensembles 20, l'unité de supervision 14 recevant directement des ensembles 20, par l'intermédiaire du réseau de supervision 18, les informations nécessaires à la surveillance centralisée du système. Cette séparation physique des réseaux de terrain et de supervision est souhaitable car, d'une part, ils doivent transmettre des messages de types différents, d'autre part, ils doivent travailler à des débits différents, et enfin la destination des messages (automate programmable ou unité de supervision) est différente. C'est ainsi, par exemple, que le débit du réseau de terrain est supérieur au débit du réseau de supervision, tandis que les messages transmis par le réseau de supervision à l'unité de supervision sont des messages plus complexes, à la limite des messages en clair indiquant une défaillance, que les messages transmis sur le réseau de terrain par l'automate programmable, qui sont par exemple des ordres de démarrage ou d'arrêt d'un moteur, d'ouverture et de fermeture d'un vérin.

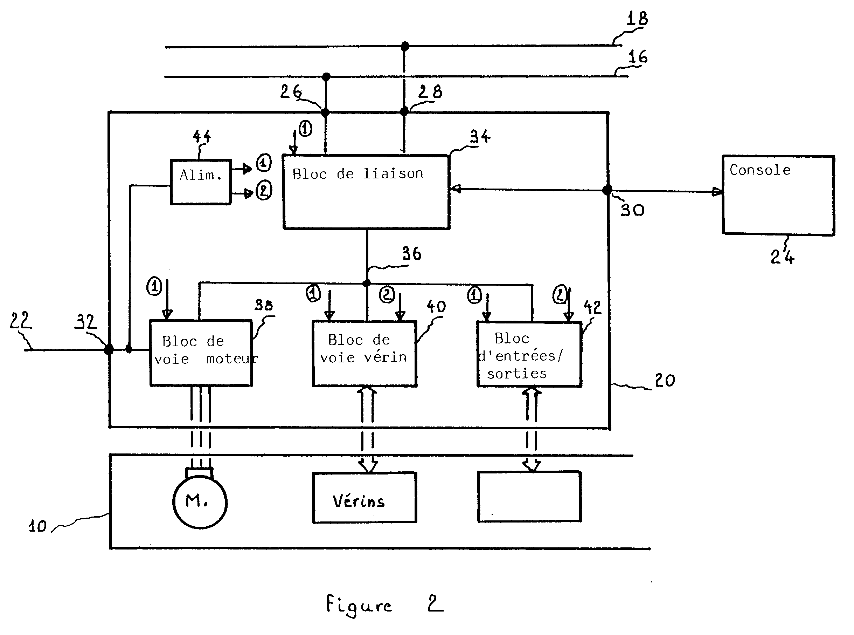

Le schéma synoptique de la figure 2 représente un ensemble 20 de commande et de protection selon l'invention. Cet ensemble est connecté par des bornes de connexion 26 et 28 respectivement aux réseaux de conduite 16 et de surveillance 18, par une borne 30 d'entrée de configuration et de paramétrage à la console associée 24, par une borne de connexion 32 au réseau 22 d'alimentation en énergie électrique et par des bornes de connexion (non représentées) aux divers éléments, actionneurs et capteurs, du processus 10.

L'ensemble 20 comporte un bloc de liaison 34 relié par un réseau série interne 36 à divers blocs indépendants spécialisés, qui seront appelés blocs de voies dans la suite de la description.

Sur la figure 2, trois blocs de voies sont représentés, à titre d'exemple, un bloc 38 de commande et de protection de voie moteur, un bloc 40 de commande et de protection de voies vérin et un bloc 42 d'entrées-sorties indépendantes. Il est bien évident que l'invention n'est limitée, ni à ce nombre de blocs de voies, ni à ce type de blocs de voies. En ce qui concerne leur nombre, celui-ci sera en pratique fixé par les dimensions respectives des divers éléments, un ensemble de commande et de protection 20 étant réalisé sous forme modulaire, de manière à pouvoir être disposé sur des rails normalisés DIN dans un coffret de taille standard 19 pouces (480 mm).

Un bloc de voies est affecté à la commande et à la protection, ou au contrôle d'une ou plusieurs voies, une voie étant un ensemble d'actionneurs et de capteurs fortement liés entre eux par des relations qui sont indépendantes de l'application d'automatisation.

A titre d'exemple, une voie vérin est constituée par l'électrodistributeur de commande du vérin et les capteurs de fin de course associés, une voie moteur comportant le contacteur statique de commande du moteur, les capteurs d'intensité, les contacts de signalisation du système de protection, etc...

Un même bloc de voies commande une seule voie, dans le cas d'un moteur, ou plusieurs voies de même nature. Ainsi, dans un mode de réalisation préférentiel, un bloc de voies vérin assure la commande et la protection de 8 vérins au maximum.

De même, un bloc d'entrées-sorties, par exemple tout-ou-rien, assure le contrôle de 16 voies, c'est-à-dire de 16 entrées et/ou sorties indépendantes au maximum.

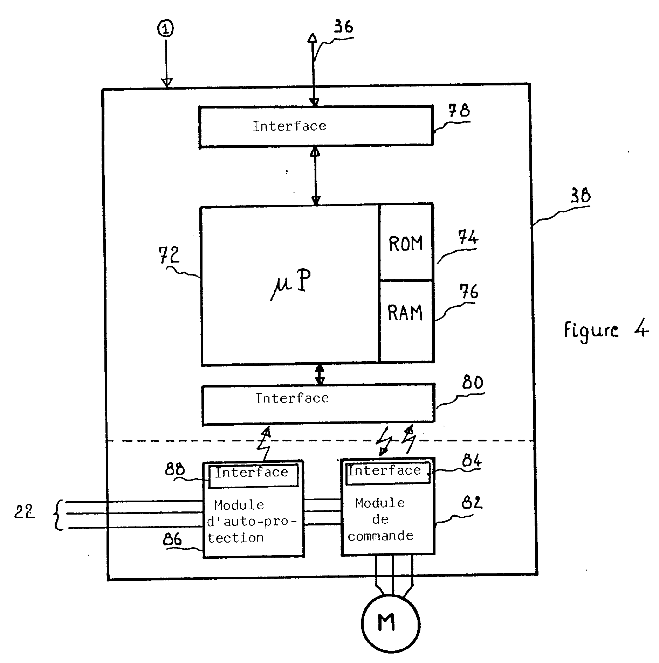

La structure et le fonctionnement d'un bloc de voie moteur, d'un bloc de voies vérin et d'un bloc d'entrées-sorties seront explicités plus en détail par la suite, en référence aux figures 4 à 6.

Le type de blocs de voies est adapté au processus à contrôler, et peut, à titre d'exemple, comporter en outre un bloc de voies d'interface de variateur de vitesse, un bloc de voies d'interface de régulateur, un bloc d'entrées-sorties analogiques, un bloc de voies de commande d'axe, etc...

Chaque bloc de voies comporte un microprocesseur, préprogrammé en fonction du type de voies qu'il contrôle, de manière à en gérer la commande et la protection. Ainsi, alors qu'habituellement la séquence de commande d'une voie, d'un vérin par exemple, était jusqu'ici programmée au niveau de l'automate programmable, un bloc de voies vérin suivant l'invention, spécialisé pour le contrôle de vérins, comporte un programme spécialisé figé, le bloc pouvant recevoir de la console 24, par l'intermédiaire du bloc de liaison 34 des données de configuration et de paramétrage permettant d'adapter le contrôle au type de vérin utilisé. Ainsi, un ordre d'ouverture d'un vérin envoyé par l'automate programmable 12 sera transmis par le bloc de liaison 34 et par le réseau série interne 36 au bloc de voies vérin 40 contrôlant le vérin concerné, et la séquence de commande et de contrôle de l'ouverture de ce vérin sera effectuée, de manière décentralisée, par le bloc de voies spécialisé concerné.

L'ensemble 20 comporte également un dispositif d'alimentation 44 connecté par la borne 32 au réseau 22 d'alimentation en énergie électrique. Ce dispositif fournit sur une sortie 1 une tension, par exemple 5 V, destinée à l'alimentation de tous les circuits électroniques de l'ensemble, et sur une sortie 2 la tension d'alimentation de puissance nécessaires aux différents blocs de voies, à l'exception des blocs de voie moteur, qui sont reliés directement au réseau 22. A titre d'exemple, le réseau 22 fournit une tension d'alimentation triphasée de 380 V, tandis que la tension disponible sur la sortie 2 du dispositif d'alimentation 44 est par exemple une tension de 24 V ou de 48 V, continue ou alternative, la puissance nécessaire sur une voie vérin étant par exemple de l'ordre de quelques watts.

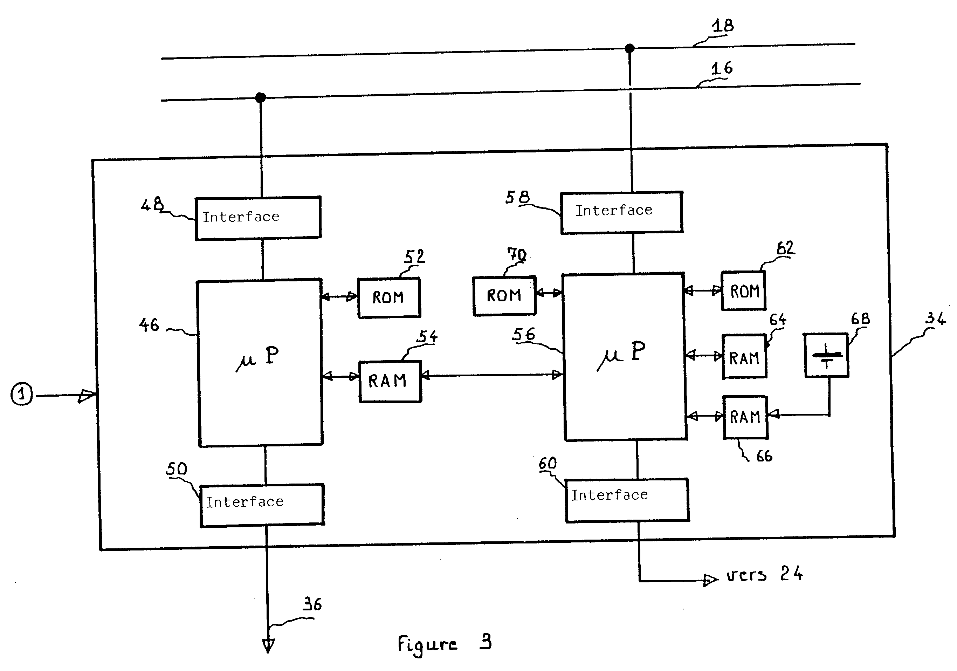

Le bloc de liaison 34 est représenté plus en détail sur la figure 3. Il réalise la liaison entre les réseaux de terrain et de supervision, le réseau série interne 36 et la console 24.

Dans le mode de réalisation préférentiel représenté sur la figure 3, le bloc de liaison comporte deux microprocesseurs. Le premier microprocesseur 46 est relié par une interface 48 au réseau de terrain 16 et par une interface 50 au réseau série interne 36. Le microprocesseur comporte toutes les ressources habituelles d'un microprocesseur et est en particulier associé à une mémoire morte (ROM) 52 et à une mémoire vive (RAM) 54, de manière à assurer la gestion du réseau de terrain 16 et du réseau série interne 36. Le second microprocesseur 56 est, quant à lui, relié par une interface 58 au réseau de supervision et par une interface 60 à la console 24. Il comporte également toutes les ressources habituelles d'un microprocesseur et est associé à une première mémoire morte (ROM) 62, une première mémoire vive (RAM) 64, une seconde mémoire vive (RAM) 66, ou mémoire de paramètres, reliée à une batterie 68, et une seconde mémoire morte (ROM) 70 servant de dictionnaire. La mémoire de paramètres 66 peut être une mémoire de type EEPROM. Le second microprocesseur 56 a également accès directement à la mémoire vive (RAM) 54 du premier, permettant ainsi un échange d'informations entre les deux microprocesseurs. De cette manière, le second microprocesseur 56 gère le réseau de supervision et le dialogue avec l'opérateur par l'intermédiaire de la console 24, permet l'échange d'informations, par l'intermédiaire de la mémoire 54 et du premier microprocesseur, entre ces réseaux et le réseau interne 36 et assure la sauvegarde des paramètres dans la mémoire 66 en cas de coupure du réseau d'alimentation. La mémoire morte 70 est une mémoire dite mémoire-dictionnaire, contenant tous les éléments nécessaires à la constitution de messages en clair sur le réseau de supervision et, éventuellement, sur le réseau de terrain.

La tension d'alimentation (5 V) nécessaire au fonctionnement des divers éléments du bloc de liaison 34 est fournie par la sortie 1 du dispositif d'alimentation 44. Les liaisons internes ont été omises pour ne pas surcharger inutilement la figure.

Le bloc de liaison sert d'aiguillage et de convertisseur de protocoles entre les différents réseaux qui lui sont reliés. Il n'intervient pas sur le déroulement séquentiel du processus qui reste fixé par l'automate programmable. Les interfaces 48 et 58 contiennent non seulement les jonctions physiques nécessaires, mais également les protocoles correspondant à ceux utilisés sur le réseau associé. Un simple changement d'interface utilisant un protocole différent, permet ainsi le fonctionnement de l'ensemble 20 avec un réseau de terrain et/ou de supervision utilisant un protocole d'accès différent. Ceci n'est, par contre, pas nécessaire en ce qui concerne l'interface 50 reliée au réseau série interne, celui-ci utilisant un protocole défini une fois pour toute, ni en ce qui concerne l'interface 60 reliée à la console, ce type d'appareil périphérique utilisant un protocole normalisé.

Lors d'une première mise sous tension de l'ensemble 20, l'opérateur lui fournit par l'intermédiaire de la console 24, des données de configuration et de paramétrage qui sont mises en mémoire dans la mémoire de paramètres 66. Ces données sont ensuite transmises, par l'intermédiaire des microprocesseurs 56 et 46, de la mémoire vive 54 et de l'interface 50, au réseau série interne pour être amenées aux différents blocs de voies. Les données relatives à un bloc de voies sont alors mémorisées dans ce bloc, certaines données pouvant également être mises en mémoire dans la mémoire 54.

En cas d'interruption de courant, les paramètres ne sont conservés que dans la mémoire secourue 66, qui pourra donc les fournir de nouveau aux divers blocs de voies lors d'une nouvelle mise sous tension. Pour accélérer les échanges entre le réseau série interne 36 et le réseau de terrain, certaines données stockées dans la mémoire-dictionnaire 70 sont mises en mémoire dans la mémoire vive 54 qui permet la liaison entre les deux microprocesseurs.

Les valeurs des paramètres contenues dans la mémoire 66 peuvent être modifiées à tout moment, soit localement par la console 24, soit à distance à travers le réseau de communication local à partir de l'unité de supervision.

Les échanges entre le réseau de terrain 16 et le réseau interne 36 étant plus fréquents et plus rapides qu'entre le réseau interne et le réseau de supervisione 18 ou la console 24, le mode de réalisation préféré du bloc de liaison 34 comporte, comme représenté sur la figure, deux microprocesseurs dont l'un gère le réseau de terrain et le réseau interne. Un microprocesseur unique peut néanmoins, sans sortir du cadre de l'invention, être utilisé pour réaliser les fonctions de ces deux microprocesseurs. Il est à noter que l'ensemble 20 peut fonctionner sans être relié aux réseaux de terrain et de supervision, grâce aux commandes manuelles accessibles sur le clavier de la console 24.

La figure 4 illustre plus en détail un bloc de voie moteur 38. Comme chaque bloc de voies, il comporte un microprocesseur 72 et les mémoires, morte 74 et vive 76, associées, ainsi qu'une interface 78 destinée à le connecter au réseau série interne 36.

Le bloc de voie moteur réunit dans un même bloc physique tous les éléments nécessaires à la commande et à la protection, y compris l'auto-protection, d'un moteur M. Il est relié au réseau série interne 36, au réseau d'alimentation en énergie 22 (380 V triphasé par exemple), à la sortie 1 du dispositif d'alimentation 44 pour l'alimentation en tension de tous les circuits électroniques internes au bloc (les connexions internes ne sont pas représentées pour ne pas compliquer inutilement la figure, car elles sont de type classique) et enfin au moteur M par une liaison fil à fil.

Selon le mode de réalisation préféré d'un bloc de voie moteur 38, représenté sur la figure, celui-ci est constitué par trois modules interconnectés. Le premier module, ou module de traitement, comporte le microprocesseur 72, les mémoires 74 et 76, l'interface 78, ainsi qu'une interface 80.

Un second module 82, comportant une interface 84 qui le connecte à l'interface 80, constitue un module de commande de puissance et de mesure relié directement par une liaison fil à fil, au moteur M.

Un troisième module 86, comportant une interface 88 qui le connecte à l'interface 80, constitue un module d'autoprotection réflexe, relié par des liaisons fil à fil (une par phase) d'une part au réseau 22 d'alimentation en énergie électrique et d'autre part au module de commande de puissance et de mesure 82.

Dans le module 82, les fonctions de commande du moteur M sont assurées par des contacteurs statiques de type classique avec leurs circuits de commande. Ces contacteurs sont, par exemple, constitués par des circuits hybrides à thyristors avec les circuits de commande associés. Dans le même module sont assurées les fonctions de mesure du courant et de la tension dans chacune des phases, par des moyens classiques (transformateurs d'intensité sur chaque phase pour la mesure du courant par exemple), le résultat de ces mesures étant transmis par les interfaces 84 et 80 au microprocesseur 72 du module de traitement du bloc 38 qui assure les fonctions de protection du moteur. Le module 82 assure de préférence sa propre protection (autoprotection) contre les surtensions. La liaison bidirectionnelle entre les interfaces 84 et 80 est, par exemple, une liaison optique par l'intermédiaire de photo-coupleurs, de manière à assurer un isolement galvanique entre le module de traitement et le module de commande.

Le module 86 assure la protection contre les court-circuits du module de commande 82 et du moteur et est de préférence constitué par un dispositif disjoncteur, de type électromécanique ayant un temps de réponse rapide (réflexe).

L'interface 88 du module d'autoprotection 86 transmet à l'interface 80 les informations correspondant à la position des contacts de signalisation des dispositifs d'autoprotection. Comme précédemment, il est prévu un isolement galvanique entre les interfaces. Dans le cas où le module 86 est constitué par un disjoncteur électromécanique, la liaison n'est pas une liaison optique, mais est effectuée par l'intermédiaire de microcommutateurs.

L'utilisation de deux modules séparés, 86 et 82, pour les fonctions d'autoprotection d'une part et de commande de puissance et de mesure d'autre part, permet par remplacement d'un seul des modules, d'adapter le bloc de voie moteur au calibre désiré à l'intérieur d'une gamme. C'est ainsi, par exemple, que le même module de commande et de puissance pourra être associé à des disjoncteurs (modules d'autoprotection) de calibres différents. De la même façon, la modularité du système pourra être étendue par une séparation en deux modules, de commande de puissance d'une part et de mesure d'autre part, du module 82. Inversement, les modules 82 et 86 pourraient être réunis dans un seul module, sans sortir du cadre de l'invention.

L'interface 80 comporte, outre les circuits d'interfaçage classiques proprement dits, des circuits de traitement et de mise en forme des signaux qui lui sont transmis par le module 82, notamment des circuits de redressement et de filtrage des courants mesurés et des circuits de conversion analogique-numérique. En pratique, la majorité des circuits électroniques de traitement alimentés par la même tension (5 V) que le module de traitement sera intégrée à celui-ci, dans l'interface 80, de préférence au module de commande de puissance et de mesure 82, de manière à réduire au maximum l'influence des parasites, dus notamment aux semiconducteurs de puissance constituant les contacteurs statiques, sur ces circuits de traitement.

Il est à noter que la plupart des actionneurs et capteurs de la voie moteur sont intégrés au bloc de voie moteur, réduisant ainsi le câblage avec le processus à un minimum, à savoir à trois fils de liaison avec le moteur.

Le microprocesseur 72 du bloc de voie moteur comporte dans sa mémoire morte (ROM) 74 un programme spécialisé pour la commande et la protection d'un moteur. Les paramètres permettant de personnaliser le bloc de voie moteur et provenant de la mémoire de paramètres 66 du bloc de liaison 34 sont fournis à la mémoire vive (RAM) 76 du microprocesseur 72 du bloc 38, par l'intermédiaire du réseau série interne 36, à chaque mise sous tension. Les ordres de commande du moteur transmis de l'automate programmable 12, par l'intermédiaire du réseau série interne 36, au microprocesseur 72 sont traités par celui-ci, qui veille à l'exécution de ces ordres par les organes du module de commande et de puissance 82. Dans le cas d'une commande progressive du moteur, c'est également le microprocesseur 72 du bloc 38, préprogrammé en conséquence, qui gère les boucles d'asservissement nécessaires à cette commande. De même, il est possible de prévoir une régulation de la vitesse du moteur. Le microprocesseur contrôle également la bonne exécution des ordres de commande et transmet à l'unité de supervision 14, par l'intermédiaire du réseau série interne 36 du bloc de liaison 34 et du réseau de supervision 18, les informations ou compte-rendus correspondants. De plus, le microprocesseur 72 du bloc de voie moteur 38 assure des fonctions de protection du moteur à partir des mesures de courant et de tension qui lui sont fournies par le module 82.

Dans tous les cas, le microprocesseur du bloc de voie moteur assure la protection thermique de la ligne et du moteur. Il peut, de plus, être préprogrammé pour assurer les protections rotor bloqué, marche à vide, manque de phase, inversion de phases, démarrage trop long, etc... Comme précédemment pour les ordres de commande, le microprocesseur transmet au réseau de supervision les informations nécessaires relatives aux fonctions de protection qu'il assure, ainsi qu'aux fonctions d'autoprotection assurées par le module d'autoprotection 86. Ainsi, le bloc de voie moteur 38 assure à la fois la commande et la protection, autoprotection comprise, d'un moteur M à partir d'informations qui lui sont transmises par le réseau série interne 36 et par l'interface 80 et communique à ce même réseau les informations nécessaires à un niveau hiérarchique supérieur pour la surveillance du processus, ces informations étant alors mises en forme (en clair) dans le bloc de liaison 34.

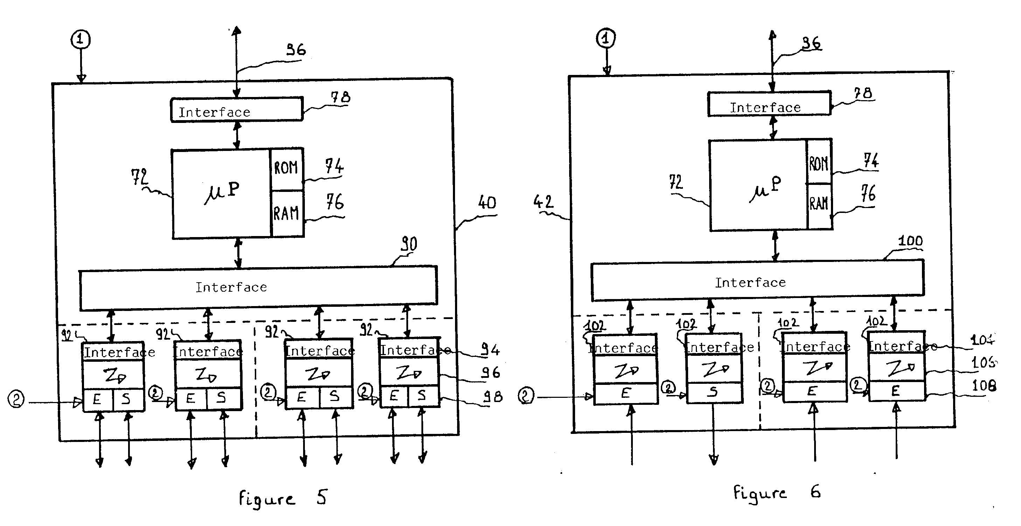

Un bloc 40 de commande et de protection de voies vérin est illustré plus en détail sur la figure 5. Il est constitué par un module de traitement comportant un microprocesseur 72 et les mémoires 74, 76, associées, une interface 78 de connexion au réseau série interne 36 et une interface 90 destinée à connecter le module de traitement à plusieurs cartes groupe de vérins 92. En pratique, chaque carte 92 est destinée au contrôle d'un groupe de deux vérins et réalisée sur un circuit imprimé, deux cartes étant réunis pour former un module (délimité par des pointillés sur la figure). Un bloc de voies vérin est donc constitué physiquement par l'assemblage d'un module de traitement et d'un ou deux modules, chaque module contrôlant 4 vérins. Le bloc 40 est relié au réseau série interne 36, à la sortie 1 du dispositif d'alimentation 44 pour l'alimentation en tension de tous les circuits électroniques internes au bloc, à la sortie 2 du dispositif d'alimentation 44 pour fournir aux vérins la puissance électrique qui leur est nécessaire, et enfin aux actionneurs et capteurs des voies vérin associées par des liaisons fil à fil.

Chaque carte 92 est constituée par une interface 94 connectée à l'interface 90 du module de traitement du bloc 40 et séparée par une barrière d'isolement galvanique 96 d'une interface 98 qui est directement reliée aux capteurs et actionneurs des deux voies vérin associées. La liaison entre les interfaces 94 et 98 d'une carte s'effectue de préférence par l'intermédiaire de deux dispositifs photocoupleurs, la commande et la surveillance de chacun des vérins associé à un groupe s'effectuant de manière totalement indépendante de celle de l'autre vérin du même groupe. Chaque interface 98 a été représentée schématiquement sous la forme d'une partie entrée E d'une partie sortie S, reliées fil à fil respectivement aux capteurs et actionneurs associés. Les liaisons fil à fil (2 entrées et 2 sorties par vérin) sont représentées schématiquement sous la forme de deux liaisons par interface pour ne pas alourdir inutilement la figure. Chaque interface 98 est également reliée à la sortie 2 du dispositif d'alimentation 44 qui constitue l'entrée puissance du bloc de voies vérin.

Le microprocesseur 72 du bloc 40 est préprogrammé, de manière à assurer la commande de tous les vérins associés au bloc. Les informations de configuration et de paramétrage nécessaires à la personnalisation du bloc 40 sont introduits dans la mémoire vive 76, à partir de la mémoire de paramètres 66, à chaque mise sous tension de l'ensemble 20. A titre d'exemple, les informations liées au type d'électrodistributeur à commander, à une ou plusieurs bobines, c'est-à-dire monostable ou bistable, font partie des informations de configuration transmises à la mémoire vive 76, de manière à adapter le logiciel contenu dans la mémoire morte 74, qui est identique pour tous les types de vérins, au matériel effectivement utilisé.

Le microprocesseur 72 du bloc 40 assure, en fonction des ordres qui lui sont transmis par le réseau série interne 36, la commande des vérins, indépendamment les uns des autres et le contrôle de l'exécution de ces ordres. A titre d'exemple, il vérifie que l'ouverture du vérin a bien été effectuée dans un délai prédéterminé, par exemple 1 s, après l'envoi d'un ordre de commande et envoie alors un compte-rendu, positif ou négatif, au réseau de supervision par l'intermédiaire du réseau interne et du bloc de liaison.

Il n'y a pas au niveau de l'ensemble 20, que ce soit au niveau du bloc de liaison 34 ou au niveau des microprocesseurs 72 des blocs de vois, de vérification de la compatibilité des ordres donnés par l'automate. La détermination de la séquence des ordres de commande des divers actionneurs du processus est effectuée exclusivement au niveau de l'automate programmable 12, l'ensemble 20 ne faisant que transmettre et exécuter ces ordres. A titre d'exemple, il n'y a pas de vérification au niveau du microprocesseur 72 du bloc de voies vérin 40 de la compatibilité des ordres envoyés à 2 vérins commandés par ce bloc.

Chaque interface 98 est autoprotégée, c'est-à-dire que les entrées sont protégées contre les surtensions, tandis que les sorties sont protégées contre les court-circuits, cette autoprotection étant assurée, de manière connue, le plus près possible des capteurs ou des actionneurs, c'est-à-dire au niveau de l'interface 98 elle-même. Bien entendu, toute information concernant une défaillance est transmise au microprocesseur 72 du bloc de voies vérin 40, qui émet un message à destination du réseau de supervision.

La structure d'un bloc d'entrées-sorties tout-ou-rien (TOR) 42, représenté plus en détail sur la figure 6, est comparable à celle du bloc de voies vérin. Il est constitué par l'assemblage d'un module de traitement comportant un microprocesseur 72 et les mémoires 74, 76, associées, une interface 78 de connexion au réseau série interne 36 et une interface 100 destinée à connecter le module de traitement à plusieurs groupes 102 d'entrées-sorties TOR.

En pratique, chaque groupe comporte 2 ou 4 entrées ou 2 ou 4 sorties et deux groupes sont réunis pour former un module (délimité par des pointillés sur la figure) dont la capacité est de 4 ou de 8 entrées-sorties. Comme représenté sur la figure, tandis qu'un groupe 102 ne comporte que des entrées E ou que des sorties S, un module peut être réalisé par une combinaison d'entrées et de sorties. Un bloc de voies 42 est constitué par l'assemblage d'un module de traitement et d'un ou deux modules d'entrées-sorties, pouvant ainsi contrôler au maximum 16 entrées-sorties. Il est bien entendu que cette configuration n'est donnée qu'à titre d'exemple nullement limitatif.

Le bloc 42 est relié au réseau série interne 36, à la sortie 1 du dispositif d'alimentation 44 pour l'alimentation en tension de tous les circuits électroniques internes au bloc, à la sortie 2 du dispositif d'alimentation 44 pour fournir aux capteurs et actionneurs qui lui sont associés la puissance électrique qui leur est nécessaire, et enfin aux actionneurs et capteurs (contacts de fin de course, détecteurs de passage, microinterrupteurs, etc...) par des liaisons fil à fil. Pour ne pas alourdir la figure, ces liaisons sont représentées schématiquement sur la figure.

Chaque groupe d'entrées-sorties 102 est constitué par une interface 104 connectée à l'interface 100 du module de traitement du bloc 42 et séparée par une barrière d'isolement galvanique 106 d'une interface 108 qui est directement reliée aux capteurs et actionneurs associés et qui est, de manière classique, autoprotégée. L'interface 108 d'un groupe d'entrées assure l'autoprotection du groupe contre les surtensions et détecte les coupures et les court-circuits sur les conducteurs reliant l'interface 108 aux capteurs et aux actionneurs associés. Ces informations sont bien entendu transmises au microprocesseur 72 qui en rend compte au réseau de supervision. Dans le cas d'un groupe de sorties, l'interface 108 assure l'autoprotection du groupe contre les court-circuits. Comme dans le cas d'une carte groupe de vérins, la liaison entre les interfaces 104 et 108 et un groupe d'entrées-sorties s'effectue de préférence par une liaison optique, au moyen de photocoupleurs.

Le microprocesseur 72 du bloc 42 est préprogrammé de manière à assurer le contrôle d'entrées et de sorties et les informations de configuration et de paramétrage sont fournies à sa mémoire 76 lors de chaque mise sous tension de l'ensemble 20. L'ensemble des entrées est traité indépendamment de l'ensemble des sorties par le microprocesseur.

A partir des exemples de blocs de voies représentés sur les figures 4 à 6, l'homme de l'art sera à même de réaliser, par analogie, d'autres types de blocs de voies, qu'il s'agisse de blocs de voies d'interface de variateur de vitesse, de bloc de voies d'entrées-sorties analogiques, de bloc de voies de commande d'axe, etc...

## Revendications

1. Ensemble de commande et de protection faisant partie d'un système de contrôle et de commande automatisé d'un processus industriel comportant au moins un automate programmable (12) dont la sortie est reliée à un réseau de communication local, ensemble (20) comportant :
   – une borne de connexion au réseau de communication local,
   – une borne (32) de connexion à un réseau (22) d'alimentation en énergie électrique de puissance,
   – une borne (30) d'entrée de configuration et de paramétrage destinée à être connectée à une console (24) comportant un clavier et un dispositif d'affichage,
   – un dispositif d'alimentation (44) relié à la borne (32) de connexion au réseau d'alimentation en énergie électrique,
   – un bloc de liaison (34) à microprocesseur (46, 56) comportant une première entrée reliée à la borne de connexion au réseau de communication local, une seconde entrée reliée à la borne (30) d'entrée de configuration et de paramétrage, une troisième entrée reliée à une première sortie (1) du dispositif d'alimentation (44) pour assurer l'alimentation en tension des composants électroniques du bloc de liaison, la sortie du bloc de liaison étant reliée à un réseau série interne (36), et
– des blocs de voies spécialisées (38, 40, 42), les sorties de chaque bloc de voies étant reliées directement par des liaisons fil à fil aux actionneurs et aux capteurs du processus (10) associés à une ou plusieurs voies d'un seul type prédéterminé, chaque bloc de voies comportant une entrée reliée au réseau série interne, une entrée de puissance reliée au réseau (22) d'alimentation en énergie électrique, soit directement, soit par l'intermédiaire du dispositif d'alimentation (44), et une entrée reliée à la première sortie (1) du dispositif d'alimentation pour assurer l'alimentation en tension des composants électroniques du bloc de voie, chaque bloc comportant un microprocesseur (72) préprogrammé (ROM 74) de manière à assurer la commande et la protection des voies dudit type prédéterminé qui lui sont associées en fonction d'ordres de commande qui sont transmis au microprocesseur du bloc de voie par l'intermédiaire du réseau de communication local, du bloc de liaison (34) et du réseau série interne (36) et de manière à transmettre au réseau de communication local, par l'intermédiaire du bloc de liaison (34) et du réseau série interne (36) les informations nécessaires à la surveillance des voies.

2. Ensemble selon la revendication 1, caractérisé en ce que le réseau de communication local est constitué par un réseau de terrain (16) reliant l'ensemble (20) à l'automate programmable (12) et un réseau de supervision (18) reliant l'ensemble (20) directement à une unité de supervision (14), elle-même reliée par une liaison bidirectionnelle à l'automate programmable (12) qu'elle contrôle.

3. Ensemble selon la revendication 2, caractérisé en ce que le bloc de liaison (34) comporte deux microprocesseurs (46, 56), dont le premier (46) est connecté au réseau de terrain (16) et au réseau série interne (36) et dont le second (56) est connecté au réseau de supervision (18) et à la borne (30) d'entrée de configuration et de paramétrage, une mémoire vive (54) commune aux deux microprocesseurs (46, 56) permettant l'échange d'informations entre les deux microprocesseurs.

4. Ensemble selon la revendication 3, caractérisé en ce que le bloc de liaison (34) comporte une mémoire vive de paramètres (66) reliée à une batterie (68) et connectée au second microprocesseur (56) du bloc de liaison.

5. Ensemble selon l'une des revendications 1 à 4, caractérisé en ce qu'il comporte un bloc de voie moteur (38) comportant un module de traitement à microprocesseur (72) connecté par une première interface (78) au réseau série interne (36) et par une seconde interface (80) à un module de commande de puissance et de mesure (82) et à un module d'autoprotection (86), le module d'autoprotection, assurant la protection du bloc en cas de court-circuit, étant connecté fil à fil au réseau d'alimentation en énergie (22) et au module de commande de puissance et de mesure (82), ce dernier, relié fil à fil au moteur (M) assurant les fonctions de commande du moteur et de mesure du courant et de la tension dans chacune des phases du circuit d'alimentation en puissance du moteur, le microprocesseur (72) du bloc de voie moteur étant préprogrammé de manière à assurer la commande du moteur à partir des ordres de commande qui lui sont transmis par le réseau série interne (36), la protection du moteur en fonction des informations qui lui sont fournies par les organes de mesure du module de commande de puissance et de mesure (82), et à transmettre au réseau série interne (36) les informations en provenance des modules d'autoprotection (86) et de commande de puissance et de mesure (82), nécessaires à la surveillance de la voie moteur.

6. Ensemble selon l'une des revendications 1 à 5, caractérisé en ce qu'il comporte un bloc de voies vérin (40) comportant un module de traitement à microprocesseur (72) connecté par une première interface (78) au réseau série interne (36) et par une seconde interface (90) à des cartes groupe de vérins (92) autoprotégés, chaque carte (92) étant connectée à une seconde sortie (2) du dispositif d'alimentation (44) et reliée fil à fil aux actionneurs et contacteurs des voies vérins associées, le microprocesseur (72) du bloc de voies vérin étant préprogrammé pour assurer la commande et la surveillance des vérins associés au bloc et comportant une mémoire vive (76) destinée à recevoir, par l'intermédiaire du bloc de liaison (36) les informations en provenance de la console (24) nécessaires à la configuration et au paramétrage du bloc.

7. Ensemble selon l'une des revendications 1 à 6, caractérisé en ce qu'il comporte un bloc de voies constitué par un bloc d'entrées-sorties (42) comportant un module de traitement à microprocesseur (72) connecté par une première interface (78) au réseau série interne et par une seconde interface (100) à des groupes d'entrées-sorties (102) autoprotégées, chaque groupe d'entrées-sorties (102) étant connecté à une seconde sortie (2) du dispositif d'alimentation (44) et relié fil à fil aux actionneurs et contacteurs des voies associés, le microprocesseur (72) du bloc d'entrées-sorties étant préprogrammé pour assurer la commande et la surveillance des capteurs et des actionneurs associés au bloc.

**Patentansprüche**

1. Steuerungs- und Schutzeinrichtung (20) als Bestandteil eines automatisierten Überwachungs- und Steuerungssystems für industrielle Prozesse mit mindestens einer speicherprogrammierbaren Steuerung (12), deren Ausgang mit einem lokalen Datenübertragungsnetz verbunden ist, bestehend aus:
– einer Anschlußklemme für die Verbindung mit dem lokalen Datenübertragungsnetz
– einer Anschlußklemme (32) für die Verbindung mit dem Einspeisenetz der Leistungsstromkreise
– einer Eingangsklemme (30) für den Anschluß eines Steuerpults (24) mit Tastatur und Anzeigeeinheit zur Konfigurierung und Parametereingabe,
– einer mit der Anschlußklemme (32) des Einspeisenetzes verbundenen Stromversorgungseinheit (44),
– einer mit Mikroprozessoren (46, 56) ausgestatteten Kopplungseinheit (34) mit einem Eingang an der Anschlußklemme des lokalen Datenübertragungsnetzes, einem zweiten Eingang an der Klemme (30) für die Konfigurierung und Parametereingabe und einem dritten Eingang am ersten Ausgang (1) der Stromversorgungseinheit (44) zur Gewährleistung der Spannungsversorgung der Elektronikkomponenten der Kopplungseinheit, wobei der Ausgang der Kopplungseinheit an ein internes serielles Netz (36) angeschlossen ist, und
– mehreren speziellen Signalgruppen-Steuereinheiten (38, 40, 42), deren jeweilige Ausgänge über Einzeldrahtverbindungen direkt mit den einem oder mehreren Datenkanälen des gleichen Typs zugeordneten Stellgliedern und Meßwertgebern des Prozesses (10) verbunden sind, wobei ein Eingang jeder Signalgruppen-Steuereinheit an das interne serielle Netz, ein Leistungseingang entweder direkt oder über die Stromversorgungseinheit (44) an das Einspeisenetz (22) und ein Eingang zur Gewährleistung der Spannungsversorgung der Elektronikkomponenten der Signalgruppen-Steuereinheit an den ersten Ausgang (1) der Stromversorgungseinheit angeschlossen ist, und jede einzelne dieser Steuereinheiten über einen vorprogrammierten (ROM 74) Mikroprozessor (72) verfügt, um die Steuerung und den Schutz des jeweiligen zugeordneten Datenkanaltyps in Abhängigkeit von den über das lokale Datenübertragungsnetz, die Kopplungseinheit (34) und das interne serielle Netz (36) an den Mikroprozessor der Signalgruppen-Steuereinheit übertragenen Steuerbefehlen zu gewährleisten, und um die zur Überwachung der Datenkanäle notwendigen Informationen über die Kopplungseinheit (34) und das interne serielle Netz (36) an das lokale Datenübertragungsnetz weiterzuleiten.

2. Steuerungs- und Schutzeinrichtung nach Anspruch 1, dadurch gekennzeichnet, daß das lokale Datenübertragungsnetz aus einem untergeordneten Netz (16) zur Verbindung der Steuerungs- und Schutzeinrichtungen mit der speicherprogrammierbaren Steuerung (12) und einem übergeordneten Netz (18) zur direkten Verbindung der Steuerungs- und Schutzeinrichtungen mit einem zentralen Leitsystem (14) besteht, welches wiederum über eine Duplexleitung mit der ihm untergeordneten speicherprogrammierbaren Steuerung verbunden ist.

3. Steuerungs- und Schutzeinrichtung nach Anspruch 2, dadurch gekennzeichnet, daß die Kopplungseinheit (34) mit zwei Mikroprozessoren (46, 56) ausgerüstet ist, wobei der erste (46) mit dem untergeordneten Netz (16) und dem internen seriellen Netz (36) und der zweite (56) mit dem übergeordneten Netz (18) und der Eingangsklemme (30) zur Konfigurierung und Parametereingabe verbunden ist, und der Datenaustausch zwischen den beiden Mikroprozessoren (46, 56) über einen gemeinsamen flüchtigen Speicher (54) erfolgt.

4. Steuerungs- und Schutzeinrichtung nach Anspruch 3, dadurch gekennzeichnet, daß die Kopplungseinheit (34) über einen mit einer Batterie (68) und dem zweiten Mikroprozessor (56) verbundenen flüchtigen Parameterspeicher (66) verfügt.

5. Steuerungs- und Schutzeinrichtung nach einem der Ansprüche 1 bis 4, gekennzeichnet durch eine Signalgruppen-Steuereinheit für Motoren (38) mit einem Mikroprozessormodul (72), das über eine Schnittstelle (78) mit dem internen seriellen Netz (36) und über eine weitere Schnittstelle (80) mit einem Leistungs-steuerungs- und Meßmodul (82) sowie einem Eigensicherungsmodul (86) verbunden ist, das den Kurzschlußschutz der Steuereinheit gewährleistet und über Einzeldrahtverbindungen an das Einspeisenetz (22) und das Leistungssteuerungs- und Meßmodul (82) angeschlossen ist, welches wiederum über Einzeldrahtverbindung mit dem Motor (M) verbunden ist und die Motorsteuerung sowie die Strom- und Spannungsmessung in jeder Phase des Motör Einspeisenetzes gewährleistet, wobei der Mikroprozessor (72) der Signalgruppen-Steuereinheit für Motoren so vorprogrammiert ist, daß er die Motorsteuerung in Abhängigkeit von den über das interne serielle Netz (36) übertragenen Steuerbefehlen, den Motorschutz in Abhängigkeit von den durch die Meßwertgeber des Leistungssteuerungs- und Meßmoduls (82) übermittelten Daten sowie die Übertragung der für die Überwachung der Motor-Datenkanäle erforderlichen Daten der Eigensicherungsmodule (86) und der Leistungssteuerungs- und Meßmodule (82) an das interne serielle Netz (36) gewährleistet.

6. Steuerungs- und Schutzeinrichtung nach einem der Ansprüche 1 bis 5, gekennzeichnet durch eine Signalgruppen-Steuereinheit für Zylinder (40) mit einem Mikroprozessormodul (72), das über eine Schnittstelle (78) mit dem internen seriellen Netz (36) und über eine weitere Schnittstelle (90) mit Ein-/Ausgabebaugruppen für eigensichere Zylinder (92) verbunden ist, wobei jede Baugruppe (92) an einen zweiten Ausgang (2) der Stromversorgungseinheit (44) und über Einzeldrahtverbindungen an die Stellglieder und Meßwertgeber der zugeordneten Zylinder-Datenkanäle angeschlossen ist, und der Mikroprozessor (72) der Zylinder-Steuereinheit zur Gewährleistung der Steuerung und Überwachung der zugeordneten Zylinder vorprogrammiert sowie mit einem flüchtigen Speicher (76) ausgerüstet ist, der zur Aufnahme der für die Konfigurierung und Parametrierung der Zylinder-Steuereinheit erforderlichen und vom Steuerpult (24) über die Kopplungseinheit (34) übermittelten Daten dient.

7. Steuerungs- und Schutzeinrichtung nach einem der Ansprüche 1 bis 6, gekennzeichnet durch eine Signalgruppen-Steuereinheit mit Ein-/Ausgabeblock (42), bestehend aus einem Mikroprozessormodul (72), das über eine Schnittstelle (78) mit dem internen seriellen Netz und über eine weitere Schnittstelle (100) mit eigensicheren Ein-/Ausgabebaugruppen (102) verbunden ist, wobei jede Baugruppe (102) an einen zweiten Ausgang (2) der Stromversorgungseinheit (44) und über Einzeldrahtverbindungen an die Stellglieder und Meßwertgeber der zugeordneten Datenkanäle angeschlossen ist, und der Mikroprozessor (72) der Steuereinheit mit Ein-/Ausgabeblock zur Gewährleistung der Steuerung und Überwachung der zugeordneten Stellglieder und Meßwertgeber vorprogrammiert ist.

**Claims**

1. A control and protection assembly forming part of an automated industrial process control and monitoring system comprising at least one programmable controler (12) whose output is connected to a local area communication network, the assembly (20) comprising:
   – a connection terminal to the local area communication network,
   – a connection terminal (32) to the electrical power supply system (22),
   – a configuration and parameter setting input terminal (30) designed to be connected to a console (24) comprising a keyboard and a display device,
   – a power supply device (44) connected to the electrical power supply system connection terminal (32),
   – a micro-processor (46, 56) based connecting unit (34) comprising a first input connected to the local area communication network connection terminal, a second input connected to the configuration and parameter setting input terminal (30), a third input connected to a first output (1) of the power supply device (44) to provide the voltage supply to the electronic circuitry of the connecting unit, the connecting unit output being connected to an internal serial network (36), and
   – specific channel units (38, 40, 42), the outputs of each channel unit being directly connected, by wire-to-wire connections, to the process (10) actuators and sensors associated with one or more channels of a predetermined single type, each channel unit comprising an input connected to the internal serial network, a power input connected to the electrical power supply system (22), either directly or via the power supply device (44), and an input connected to the first output (1) of the power supply device to provide the voltage supply to the electronic circuitry of the channel unit, each unit comprising a microprocessor (72) preprogrammed (ROM 74) so as to perform control and protection of the channels of said predetermined type which are associated with it according to the control orders transmitted to the microprocessor of the channel unit via the local area communication network, the connecting unit (34) and the internal serial network (36), and so as to transmit the information required for monitoring the channels to the local area communication network, via the connecting unit (34) and the internal serial network (36).

2. The assembly according to claim 1, characterized in that the local area communication network is made up of a field network (16) connecting the assembly (20) to the programmable controler (12) and a monitoring network (18) connecting the assembly (20) directly to a monitoring unit (14), itself connected by bidirectional link to the programmable controler (12) which it monitors.

3. The assembly according to claim 2, characterized in that the connecting unit (34) comprises two microprocessors (46, 56), the first one (46) of which is connected to the field network (16) and to the internal serial network (36) and the second one (56) of which is connected to the monitoring network (18) and to the configuration and parameter setting input terminal (30), a random access memory (54) common to both microprocessors (46, 56) enabling data to be exchanged between the two microprocessors.

4. The assembly according to claim 3, characterized in that the connecting unit (34) comprises a parameter random access memory (66) connected to a battery (68) and to the second microprocessor (56) of the connecting unit.

5. The assembly according to one of claims 1 to 4, characterized in that it comprises a motor channel unit (38) comprising a microprocessor-based processing module (72) connected by a first interface (78) to the internal serial network (36), and by a second interface (80) to a power control and measurement module (82) and to a self-protection module (86), the self-protection module providing protection of the unit in the event of a short-circuit, being connected wire-to-wire to the electrical power supply system (22) and to the power control and measurement module (82), the latter, connected wire-to-wire to the motor (M) performing the functions of motor control and current and voltage measurement in each of the phases of the motor power supply circuit,the motor channel unit microprocessor (72) being preprogrammed so as to perform motor control from control orders transmitted to it by the internal serial network (36), motor protection according to information supplied to it by the power control and measurement module (82) measuring devices, and to transmit the information from the self-protection modules (86) and power control and measurement modules (82), necessary for monitoring the motor channel, to the internal serial network (36).

6. The assembly according to one of the claims 1 to 5, characterized in that it comprises a jack channel unit (40) comprising a microprocessor-based processing module (72) connected by a first interface (78) to the internal serial network (36) and by a second interface (90) to self-protected jack group boards (92), each board (92) being connected to a second output (2) of the power supply device (44) and connected wire-to-wire to the actuators and contactors of the associated jack channels, the jack channel unit microprocessor (72) being preprogrammed to perform control and monitoring of the jacks associated with the unit and comprising a random access memory (76) designed to receive, via the connecting unit (36), the information coming from the console (24) necessary for configuration and parameter setting of the unit.

7. The assembly according to one of claims 1 to 6, characterized in that it comprises a channel unit made up of an inputs-outputs unit (42) comprising a microprocessor-based processing module (72) connected by a first interface (78) to the internal serial network and by a second interface (100) to groups of self-protected inputs-outputs (102), each group of inputs-outputs (102) being connected to a second output (2) of the power supply device (44) and connected wire-to-wire to the actuators and sensors of the associated channels, the microprocessor (72) of the inputs-outputs unit being preprogrammed so as to perform control and monitoring of the sensors and actuators associated with the unit.

Figure: 1

Unité de supervision

14

Automate programmable

12

18

16

24    20

Ensemble de commande et de protection

22

24    20

Ensemble de commande et de protection

22

24    20

Ensemble de commande et de protection

22

10

Processus

EP 0 278 802 B1

12

Figure 2

EP 0 278 802 B1

18

16

48 Interface

58 Interface

52 ROM

70 ROM

62 ROM

46 μP

56 μP

54 RAM

64 RAM

68

34

① 1

50 Interface

60 Interface

66 RAM

36

vers 24

Figure 3

Figure 4

EP 0 278 802 B1

figure 5

figure 6